# EUROPEAN PATENT SPECIFICATION

(11) **EP 0 507 403 B1**
(45) Date of publication and mention of the grant of the patent: **08.07.1998**
(21) Application number: 92200909.7
(22) Date of filing: 30.03.1992
(51) Int. Cl.: G11B 27/28, G11B 27/10, G11B 20/12, G11B 27/034, G11B 27/30, G11B 27/22, G11B 19/12, G11B 7/007

(54) **Record carrier, reading apparatus for reading the record carrier, as well as a method and recording apparatus for recording information on a record carrier**
Aufzeichnungsträger, Ausleseeinrichtung zum Auslesen des Aufzeichnungsträgers, sowie Verfahren und Aufzeicheneinrichtung zum Aufzeichnen von Information auf einem Aufzeichnungsträger
Support d'enregistrement dispositif de lecture d'un support d'enregistrement ainsi que procédé et dispositif d'enregistrement d'information sur un support d'enregistrement

(30) Priority: 02.04.1991 EP 91200764; 26.04.1991 EP 91201005
(43) Date of publication of application: 07.10.1992
(73) Proprietor: Philips Electronics N.V., 5621 BA Eindhoven (NL)
(72) Inventor: Schylander, Erik Christian, NL-5656 AA Eindhoven (NL)
(74) Representative: Groenendaal, Antonius Wilhelmus Maria

(56) References cited:
- EP-A- 0 184 195
- EP-A- 0 325 330
- EP-A- 0 382 154
- EP-A- 0 390 268
- WO-A-80/01328
- DE-A- 3 621 263
- DE-A- 3 820 590
- US-A- 4 775 969
- US-A- 4 847 708
- PATENT ABSTRACTS OF JAPAN vol. 14, no. 484 (P-1120) 22 October 1990 & JP-A-02 195 586 (SHINANO KENSHI K.K.) 2 August 1990
- PATENT ABSTRACTS OF JAPAN vol. 15, no. 24 (P-1156) 21 January 1991 & JP-A-02 267 618 (NEC ENG. LTD.) 1 November 1990
- PATENT ABSTRACTS OF JAPAN vol. 15, no. 266 (P-1223) 5 July 1991 & JP-A-03 086 975 (VICTOR CO OF JAPAN LTD.) 11 April 1991

## Description

The invention relates to a method of recording information on a record carrier, in which method an information volume is recorded in sectors of a track of the record carrier, which information volume comprises a reference to control information intended to be used for controlling the search for information in the recorded information volume, which reference is accommodated in one or more sectors within a predetermined address range.

The invention relates to a recording apparatus for recording information on a record carrier, which apparatus comprises recording means for recording information in sectors in a track of the record carrier, formatting means for composing an information volume in accordance with predetermined formatting instructions, according to which instructions the information volume is provided with control information intended to be used for controlling the search for information in the information volume, control means for causing the recording means to record the information volume while a reference to the control information is recorded in one or more sectors in a predetermined address range in the information volume.

The invention relates to a reading apparatus for reading a record carrier on which information is recorded arranged in sectors, which sectors have addresses that indicate the positions at which the relevant sectors are recorded, and in which one or more sectors having predetermined addresses comprise a reference to control information intended to be used for controlling the search for information arranged in the other sectors, which apparatus comprises address generating means for generating addresses of sectors to be searched for and control means for searching for information on the basis of the generated addresses.

Finally, the invention relates to a record carrier on which an information volume is recorded in sectors of a track of the record carrier, which information volume comprises control information intended to be used for controlling the search for information in the recorded information volume, and on which one or more sectors in a predetermined address range comprise a reference to the control information.

A method, apparatus and record carrier of the type mentioned hereinbefore are known, for example, by the name of the CD-ROM system which is described, for example, in the ISO 9660 standard. In the CD-ROM system the so-called volume descriptor is recorded as control information in an address range beginning with the sector having the logic sector number 16. This volume descriptor comprises, for example, references to the sector address of the so-called path table which table comprises the directory structure and references to directory files. This path table and these directory files contain the necessary information for searching and reading the data files included in the recorded information volume.

From WO 80/01328 a method of incremental recording data on an optical disc in annular bands of tracks is known. The bands are physically separated by gaps, which have no contents at all. In a band user data is recorded first and a directory for accessing the user data in the respective band is recorded thereafter. The last recording track of the directory contains the address of the start of the directory. The band is terminated with an end-of-band signal. If there is a previously recorded band, the directory indicates the address of the directory in the immediately preceeding band.

In the case where a record carrier of a write-once type is used for recording information composed in accordance with the CD-ROM format, the problem arises that the newly added address information cannot be found back forthwith. For that matter, a reference to the information necessary for controlling the reading operation cannot be included in the volume descriptor due to the fact that the record carrier can be written only once.

It is an object of the invention to provide means eliminating this problem.

With respect to the method this object is achieved in accordance with claim 1.

With respect to the recording apparatus this object is achieved in accordance with claim 7.

With respect to the record carrier this object is achieved in accordance with claim 18.

Since a substitute reference is included in each information volume recorded next, the control information necessary for the reach for the information is always recoverable.

This substitute reference can be searched for in a simple manner by means of a reading apparatus in accordance with claim 11.

Since the addresses referring to the substitute control information are substituted for the addresses referring to the control information in this reading apparatus, modifications in the address generating means may be omitted. This is especially advantageous in the case where the address generating means are included in the file managers of the operating system of a computer system included in the reading apparatus. Adaptations in file managers are generally undesired because these modifications affect the operating system at a high hierarchical level. In the apparatus according to the invention the modifications may be restricted to modifications of the control means which narrows down to modifications in the so-called device drivers of the operating system and modifications of the control hardware as required. These modifications do not affect the operating system at a high hierarchical level and are thus generally to be preferred.

The range of the sectors accommodating the substitute reference is preferably equal to the range in which the reference is included in the first recorded information volume. In that case a one-to-one image is obtained of the format of the sector or sectors in which the substitute reference is included to the format of the sector or sectors in the first-recorded information volume that includes the reference. This is especially advantageous if the size of the address range that includes the reference to the required control information is not a predetermined one. In that case the reading apparatus is to determine the size of the range when the addresses within the range are to be substituted. When the range of the substitute control information and the range of control information are equally large in the first recorded information volume, this size of the range can be determined on the basis of the recoverability of the range in the first recorded information volume.

To facilitate determining the size of the address range, it is to be preferred to include in the sectors of the address range information denoting the length of the address range, or to include a code in a sector at the end of the range which code denotes this end.

The substitute reference to the control information is to be recorded at a recoverable position. This requirement as to the recoverability can be met in various ways. For example, this may be done by including a reference to the addresses of the sectors in which the substitute reference to the required control information is included at the end of each next information volume. The end of the last-recorded information volume may be recovered in a simple manner preferably by detecting by means of high-speed read signal detection whether information is recorded in the detected sector. The transition from a recorded sector to an unrecorded sector of the track then indicates the end of the last-recorded information volume. The reference information may be found back by skipping from the detected end to a track portion just before the end.

The detection of the end of the last-recorded information volume on the basis of the reading signal with high-speed detection is advantageous in that this end is found extremely rapidly.

The substitute reference may also be recovered in a simple manner if recorded in sectors at a given position relative to the beginning of the information volume. In that case the substitute control information can be searched for in the next-recorded information volume on the basis of information representing the end of each information volume.

The invention is pre-eminently suitable for use when recording information on a record carrier of a write-once type and reading it therefrom, because it is then impossible to overwrite already recorded control information with modified control information. However, the invention may be used for recording and reading information on and from record carriers of a rewritable type.

Further embodiments will be described in detail hereinbelow with reference to the drawing Figures 1 to 18, in which:
Figs. 1 to 3 show a CD-ROM reading apparatus according to the state of the art;
Figs. 4 and 6 show embodiments for record carriers according to the invention;
Figs. 5, 7 and 10 show flow charts of programs executed by the embodiments for a reading apparatus according to the invention;
Fig. 8 shows an embodiment for a reading apparatus according to the invention;
Fig. 9 shows an embodiment for a circuit to be used in a reading apparatus according to the invention;
Fig. 11 shows an embodiment for a recording apparatus according to the invention;
Fig. 12 shows an embodiment for a write unit to be used in the recording apparatus according to the invention;
Figs. 13, 14, 15, 17 and 18 show flow charts of programs executed by the recording apparatus according to the invention; and
Figs. 16a to 16d show by way of illustration the layout of the record carrier during successive stages of an embodiment for the method according to the invention.

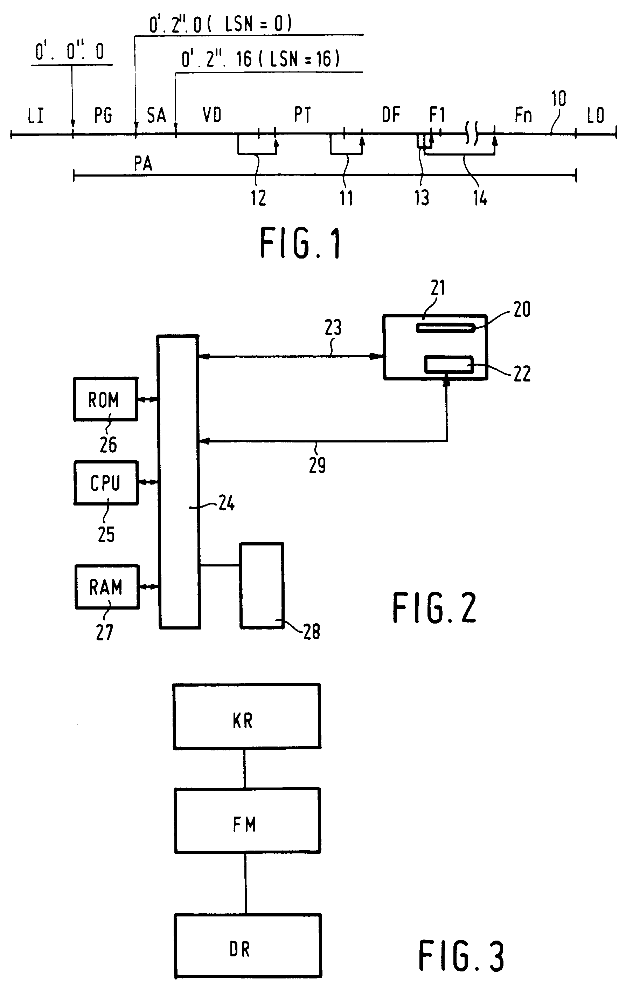

Before discussing the invention in detail, first a prior-art CD-ROM system will be briefly described with reference to the drawing Figs. 1 to 3. A CD-ROM system comprises an optically readable disc on which information is recorded according to the CD-ROM standard as described in the ISO 9660 standard and a CD-ROM reading apparatus for reading the disc. The information recorded on the disc comprises main information and sub-code information. The sub-code information is subdivided into sub-code frames. The main information is subdivided in so-called sectors having a length corresponding to that of a sub-code frame of the sub-code information. Fig. 1 diagrammatically shows the layout of a track 10 of a CD-ROM disc. The track comprises a so-called lead-in referenced LI, a program area referenced PA and a lead-out referenced LO. The combination consisting of the lead-in LI, the program area PA and the lead-out LO will henceforth be denoted information volume. The program area PA is intended for storing user information. The main information in the program area PA is subdivided into so-called sectors having a length corresponding to that of a sub-code frame. Each of the sub-code frames in the program area PA comprises an absolute time code denoting the position at which the sub-code frame concerned is recorded relative to the beginning of a program area PA. The sectors also have absolute time codes corresponding to the absolute time code in the sub-code frame recorded together with the sector. The program area PA comprises a so-called pregap referenced PG in which no main information is recorded and which can be used for synchronizing the readout. The pregap PG extends over a length referenced by the absolute time codes 0'.0".0 to 0'.2".0. The pregap is followed by a so-called system area reserved for use by the system. The system area extending from 0'.2".0 to 0'.2".16 is referenced by the letters SA. This system area SA is followed by a so-called volume descriptor referenced VD commencing at 0'.2".16 on each CD-ROM disc. The length of the volume descriptor VD is not fixed but depends on the selected use of the CD-ROM.

The volume descriptor VD, however, does comprise information about its length and is furthermore terminated by a code pattern denoting the end of the volume descriptor VD. The program area PA further includes a so-called path table referenced PT, one or more so-called directory files referenced DF and user files referenced F1, ..., Fn. The path table PT comprises information about the directory structure of the information stored on the disc. The path table further includes references to sector addresses of the directory files DF. In Fig. 1 the reference to the initial address of the directory file DF is denoted by line 11. The volume descriptor VD comprises a reference denoted by line 12 to the address of the sector in which the path table PT is stored. The directory files comprise information about the structure of the user files stored in the directory concerned and references denoted by the lines 13 and 14 to the addresses of the sectors in which the user files of the directory concerned are stored. The path table and directory file comprise the control information necessary for searching for the user files F1, ..., Fn.

Fig. 2 diagrammatically shows a CD-ROM reading apparatus for reading a CD-ROM disc 20. The CD-ROM reading apparatus comprises a CD player 21 of which an output is coupled to a system bus 24 of a customary computer system for delivering the read information over a data signal path 23. Furthermore, a central processor 25, a ROM 26, a RAM 27 and one or more information reproducing devices 28 are connected to the system bus 24.

The CD player 21 comprises a control unit 22 for searching for information on the basis of sector addresses received over the control signal path 29. The control signal path 29 is also connected to the system bus 24.

Software for the central processor 25 is loaded in the ROM 26. This software customarily comprises a so-called operating system. It is a task of the operating system, for example, to control and monitor the data transport between the elements of the equipment connected to the system bus.

Fig. 3 diagrammatically shows the structure of a customary operating system such as, for example, the OS9 operating system. Such an operating system comprises a kernel referenced KR, file managers referenced FM and device drivers referenced DR. In the case where information is desirably read from the files present on the disc, the kernel will send an I/O request to the file manager FM. On the basis of the received I/O request the file manager decides which sectors are to be read out and indicates to the device driver, by means of a logic sector number LSN, which sectors of the disc are to be read out. The logic sector number does not match the absolute time codes in the sectors on the disc 20. However, there is a fixed relation between the logic sector numbers LSN and the absolute time codes. This relation is the following: LSN = (((MIN∗60)+SEC)∗75+FR) for the absolute time code MIN'.SEC''.FR. This means that the first sector of the signal area SA is denoted LSN = 0 and the first sector of the volume descriptor VD is denoted LSN = 16. On the basis of the received logic sector numbers LSN the device driver derives the necessary control signals for the control unit 22 which unit searches for the desired sector and reads same in response to these control signals.

Before access can be gained to a requested user file, for example, file F1, the information in the volume descriptor VD, the path table PT and the directory file DF must have been read out. This reading operation takes place during the log-on procedure and/or in reaction to I/O requests made to this effect by the kernel. During this operation the file manager sends the corresponding logic sector numbers LSN to the device driver.

In the CD-ROM system described above, information extended at a later instant to the information already recorded cannot be read out. Until recently this was no objection because all CD-ROM discs were of the read-only type, so that it was impossible to add information to the disc afterwards. However, recording apparatuses have meanwhile been developed in which it is possible to record information according a CD format on a write-once disc. Such a disc can also be read out by CD-ROM reading apparatuses. For a more detailed description of the afore-mentioned recording apparatuses and write-once record carriers reference be made to the Patent Applications EP 0 265 984 and EP 0 325 330. With the afore-mentioned recording apparatus it is possible to record information next to the already recorded information volume at a later instant. However, this information cannot be accessed by the existing CD-ROM reading systems because the necessary information cannot be included in the path table and directory files due to the fact that the record carrier is of the write-once type.

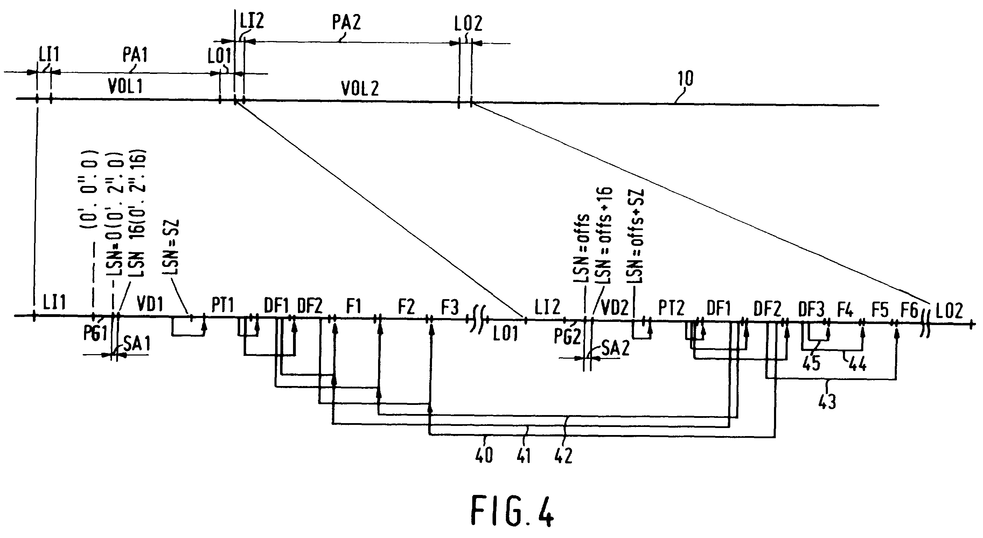

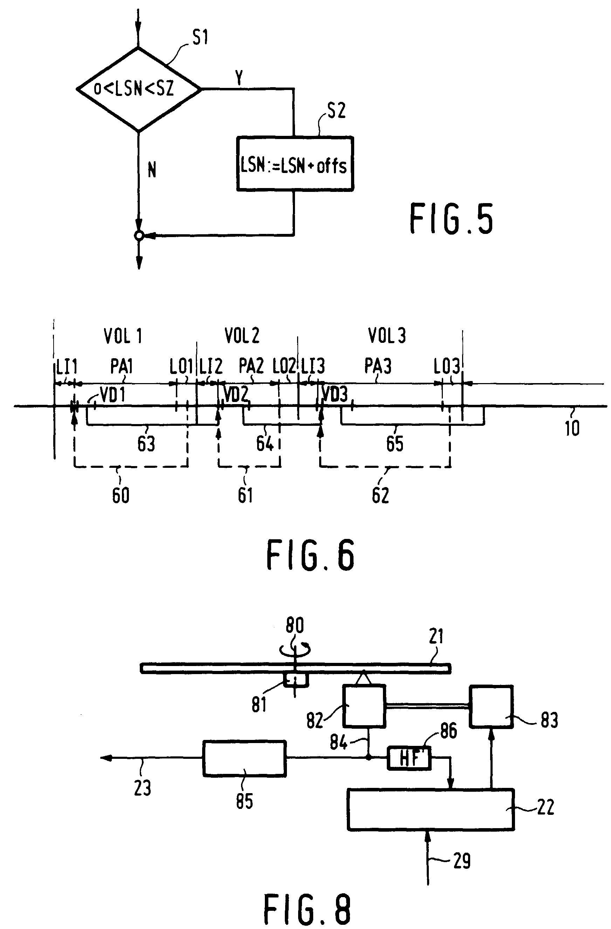

With reference to Figs. 4 and 5 embodiments for a reading apparatus and a record carrier according to the invention will be described with which the afore-mentioned objections can be met.

Fig. 4 diagrammatically shows the layout of the track 10 on the disc 20. This track comprises a first information volume VOL1, comprising a lead-in LI1, a program area PA1 and a lead-out LO1, recorded in the same fashion as described with reference to Fig. 1. Contiguous to the information volume VOL1 a second information volume VOL2 is recorded at a later instant. This second information volume VOL2 also comprises a lead-in referenced LI2, a program area referenced PA2 and a lead-out referenced LO2. The information in the program area PA2 is arranged in similar fashion to the information in the program area PA1. That is to say, that a system area SA2 and a volume descriptor VD2 are located at a predetermined distance from the beginning of the program area. In Fig. 4 the beginning of the system area SA2 is denoted by the logic sector number LSN = offs. The beginning of the volume descriptor VD2 is denoted by logic sector number LSN = offs+16. The end of the volume descriptor VD2 is denoted by the logic sector number LSN = offs+SZ. The volume descriptor VD2 has the same format as the volume descriptor VD1 in the first information volume. The volume descriptor VD2, however, may have a length different from the volume descriptor VD1. For that matter, as laid down in the ISO 9660 standard, the volume descriptor may comprise an arbitrary number of supplementary volume descriptors in addition to the primary volume descriptor. It is not necessary for the number of supplementary volume descriptors for the VD1 and VD2 volume descriptors to be equal. However, the length of VD2 must not exceed that of VD1. The reason for this will be further explained in this description. The volume descriptor VD2 comprises a reference to the sector address of a path table PT2 included in the program area PA2. The path table comprises information about the structure of the directories that include all the user files referenced F1, ..., F6 the first and second information volumes. Furthermore, the path table PT2 comprises references to directory files. These directory files comprise information about the structure of the user files included in the directory concerned and the references to the addresses of these user files. The latter references are denoted in the Figure 4 by the reference numerals 40, 41 and 42. In the embodiment for the layout of the disc shown in Fig. 4 the volume descriptor comprises a reference to the path table and the directory files with the information necessary for accessing all user files F1, ..., F6 in both the information volume VOL1 and VOL2.

Generally, path table and directory files will all be included in the last-recorded information volume. In principle, however, it is alternatively possible for this information to be recorded partly or in full in sectors not included in this information volume. It is only essential for the information volume to comprise the reference to the necessary information. Further information volumes may still be recorded contiguous to the information volume VOL2. If this is effected, always the last-recorded information volume is then to include a volume descriptor comprising a reference to a path table which contains information about the directory structure and references to the directory files for all user files in the information volume concerned and at least part of, but preferably all, previously recorded information volumes.

Fig. 5 shows a modification in the device driver of the operating system through which access is gained to all the user files in all the information volumes. The modification comprises a detection step S1 for detecting whether the logic sector number LSN received from the file manager is located in the range 0-SZ. This range includes the sector addresses of the volume descriptor VD1 in the first information volume VOL1. If the received logic sector number LSN is located in said range, step S2 is executed. In this step the received logic sector number is modified by adding thereto the value of offs. This entails that when there is a request for access to volume descriptor VD1 access is gained to volume descriptor VD2 *in lieu of* volume descriptor VD1. Through the volume descriptor VD2 access is gained to all the required information present in the path table PT2 and the directory files DF1', DF2' and DF3 for searching for all the user files in both information volume VOL2 and VOL1, so that all the user information on the disc is accessible.

For adequately modifying the logic sector numbers, the values of offs and SZ are to be known in the device driver. If these values are known to the operator of the reading apparatus, these values may be fed to the reading system by the operator in a customary fashion, for example, by means of a keyboard.

However, the disc is preferably to comprise a reference to the sector addresses of the volume descriptor of an information volume recorded later on. This may be effected by including a reference to the sector address of the beginning of the system area SA in the lead-out, for example, in the sub-code information, of each subsequently recorded information volume.

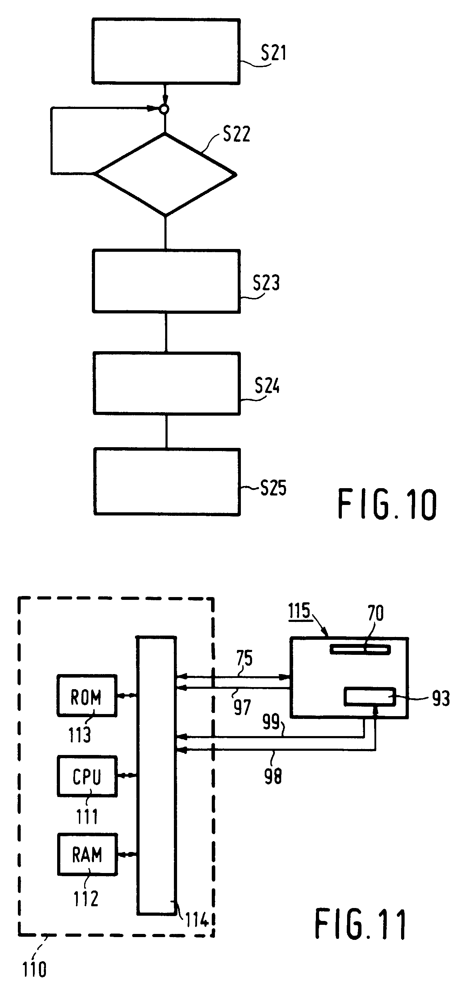

Fig. 6 shows by way of illustration a layout of the track 10 in which three information volumes VOL1, VOL2 and VOL3 are recorded. The references to the sector addresses of the volume descriptors VD1, VD2 and VD3 in the lead-outs LO1, LO2 and LO3 of the corresponding information volumes are denoted by the lines 60, 61 and 62. The lead-out LO is situated at the end of the information volume. The lead-out of the last-recorded information volume may be simply found back by searching for the transition from the track portion in which information is recorded to a track portion in which no information has yet been recorded. For a detailed description hereof, reference be made to European Patent Application 0 507 397. Fig. 8 diagrammatically shows a reading apparatus comprising means for detecting the end of the last-recorded information volume. The apparatus shown comprises a customary drive unit which includes a drive motor 81 for rotating the disc 21 around an axis 80. Opposite the rotating disc 21 an optical read head 82 is disposed which is radially movable relative to the disc 21 by means of a radial drive unit 83. The displacement caused by the drive unit 83 is controlled in a customary fashion by the control unit 22. Over a signal path 84 the read head 82 produces a read signal which is modulated according to the information pattern detected by the read head 82. This read signal is applied to the signal path 23 coupled to the system bus 24 through a customary signal processing unit 85. The read signal is also applied to a detection circuit 86. The detection circuit 86 is of a type with which the presence of a high-frequency component in the read signal can be established.

Fig. 9 shows by way of example an embodiment for the detection circuit 86 which comprises a high-pass filter 50 whose input is coupled to the read head 82 for receiving the signal produced by this read head 82. An output of the high-pass filter 50 is coupled to a rectifier circuit 51. An output of the rectifier circuit 51 is coupled to a comparing circuit 52 for comparing the signal produced by the rectifier circuit 51 with a reference value Eref. When an information pattern is present in the sector of the record carrier 1 detected by the read head 82, the signal produced by the read head 82 will comprise a high-frequency signal component to be passed by the high-pass filter 50 and then rectified by rectifier circuit 51. When an information pattern is present, the output signal of the rectifier circuit 51 will comprise a relatively large d.c. voltage component which exceeds Eref and the comparing circuit 52 will produce a signal denoting that the output signal of the read head comprises a high-frequency component and thus denoting that information had been recorded in the detected sector of disc 21.

The output signal of the detection circuit 86 is applied to the control unit 22 of the reading apparatus. The control unit 22 may comprise a microcomputer of a customary type loaded with a suitable control program for searching for the reference information at the end of the last-recorded information volume. A flow chart of an embodiment for a suitable control program is shown in Fig. 10. This program comprises a step S21 in which the drive unit 83 moves the read head 82 radially along the record carrier 21 from the beginning of the track under the control of the control unit 22. In step S22 in response to the output signal of the detection circuit 86 there is detected whether information had been recorded in the sector of the disc 21 detected by the read head. Once the output signal of the detection circuit 86 denotes that no further information has been recorded any more in the detected sector, the displacement of the read head 82 is stopped in step S23 and the read head is moved in opposite direction to about the beginning of the lead-out of the last-recorded information volume. Subsequently, when step S24 is executed, the reference information included in the lead-outs is read out. This reference information denotes the value of offs. Then, when step S25 is executed, the volume descriptor denoted by the read reference information is searched for and the value of SZ is determined when this volume descriptor is read out. This value may be determined, for example, by means of the information about the length of the volume descriptor included in the volume descriptor. Alternatively, it is possible, to detect the end of the volume descriptor by detecting the so-called volume descriptor set terminator situated at the end of the volume descriptor.

According to the detection procedure described hereinbefore, a reference to the volume descriptor of an information volume is included in the lead-out of the information volume concerned.

It is also possible to include in each recorded information volume a reference to the addresses to be used for the recording of the volume descriptor when the next information volume is recorded. In Fig. 6 these references are shown by the lines 63, 64 and 65.

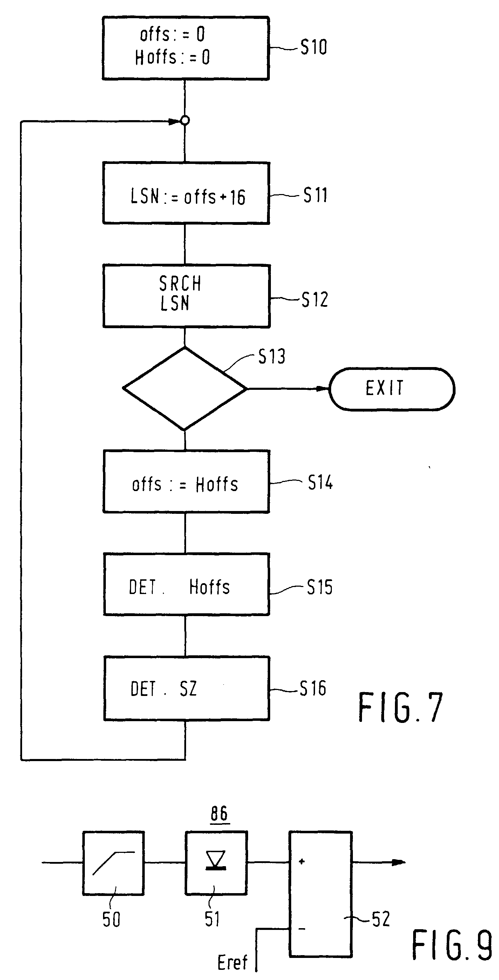

Fig. 7 shows an embodiment for a program for determining the values of offs and SZ for a record carrier in which the volume descriptor of each information volume comprises a reference to the addresses of the sectors in which the volume descriptor is recorded in the next information volume. In step S10 of the program the value of offs and the value of a sub-variable Hoffs is made equal to zero. Step S10 is followed by step S11 where the logic sector number of the address of the volume descriptor VD denotes that the instantaneous value of offs is shown. Subsequent to step S11, in step S12 the sector denoted by the logic sector number LSN is searched for. Then, in step S13, it is verified whether information is recorded in the denoted sector. If there is, the value of offs is made equal to the value of Hoffs in step S14. Subsequently, in step S15, the volume descriptor denoted by the instantaneous value of LSN is read out and the logic sector number of the volume descriptor of the next information volume is determined and assigned to Hoffs on the basis of the reference to this volume descriptor. Then, in step S16, the value of SZ is determined. This may be effected on the basis of the information about the length of the volume descriptor contained in the volume descriptor. However, this may also be effected by detecting the end of the volume descriptor denoted by the socalled volume descriptor set terminator. After step S16 step S11 is executed again. The program loop formed by the steps S11 to S16 is recurrently executed until during the execution of step S13 it is established that the sector denoted by the instantaneous value of LSN does not comprise any information. This is an indication that a sector has been detected which is located past the end of the track portion comprising information. The value of offs denotes the value of the logic sector number of the volume descriptor of the last-recorded information volume. The value of SZ denotes the length of this volume descriptor. This length is to be smaller than the length of the volume descriptor in the first-recorded information volume. If this is not the case, this implies that a sector having a logic sector number of a sector located past the end of the volume descriptor is located in the first information volume, but is smaller than the value of SZ and is no longer accessible. For that matter, a request for access to such a sector will lead to access to a sector of the volume descriptor in the last-recorded information volume.

Fig. 11 diagrammatically shows an embodiment for a recording apparatus according to the invention. The recording apparatus comprises a computer system 110 of a customary type, with a central processor 111, a RAM 112 and a ROM 113. The central processor 111, the RAM 112 and the ROM 113 are connected to a system bus 114 for mutual data transport. The recording apparatus further includes a write unit for writing information on a disc 70 of a write-once type. The write unit 115 is connected to the system bus 114 over data signal paths 75 and 97 for receiving information to be recorded and supplying information that has been read out. The write unit 115 comprises a control unit 93 for controlling the writing operation. The control unit is connected to the system bus 114 over the control signal paths 98 and 99 for the exchange of control commands and control data between the control unit 93 and the computer system 110.

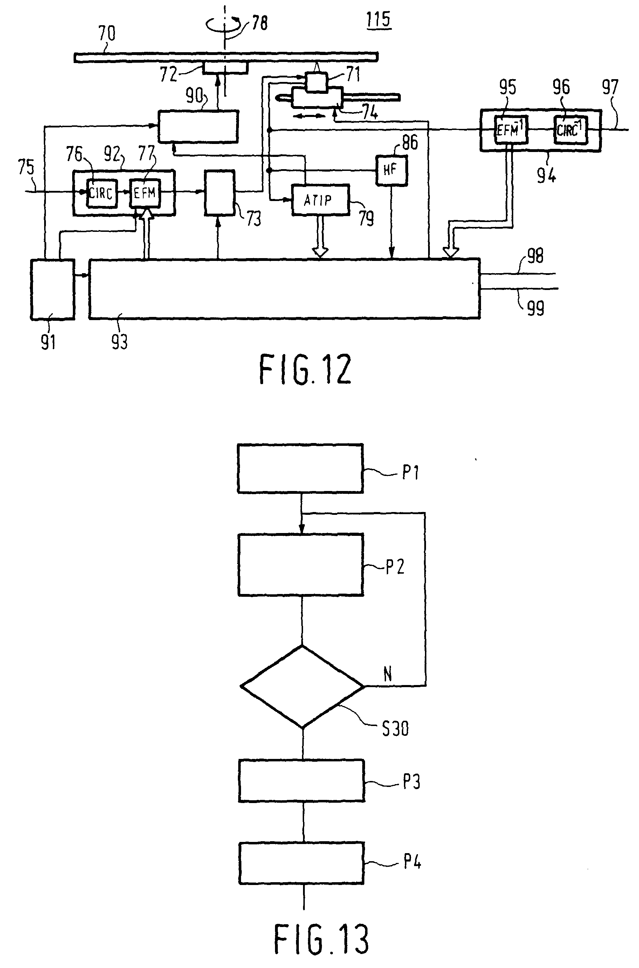

Fig. 12 shows an embodiment for the write unit 115 suitable for recording CD signals such as, for example, CD-I, CD-ROM, CD-ROM XA and PHOTO-CD signals. In this drawing Figure reference numeral 70 denotes a CD-WO-type record carrier of the optical write-once type. Such a record carrier is described in detail in Patent Applications EP 0 265 984, EP 0 325 330 and EP 0 342 748 and EP 0 397 238.

The record carrier described in these Applications comprises a helical track displaying a periodic track modulation, whose frequency is modulated in accordance with a position information signal in the form of an absolute time code signal.

The write unit 115 shown in Fig. 12 comprises a drive motor 72 for moving the record carrier 70 around an axis 78 in a rotating fashion. An optical read/write head 71 of a customary type is disposed opposite the rotating record carrier 70. The optical read/write head 71 is movable in radial direction by means of a radial displacing unit 74 which comprises, for example, a linear motor or spindle gearing. Information formatted according to the CD-ROM format is supplied over the data signal path 75. The CD-ROM format is described, for example, in the ISO-9660 standard. The information supplied over the data signal path 75 is applied to an input stage 92 which rearranges the received information with the aid of a customary CIRC encoder 76 and adds redundant information for error correction purposes and then converts the information by means of a customary EFM modulator 77 into an EFM modulated signal. The EFM modulated signal is applied to a laser control circuit 73 which transforms the EFM modulated signal into a suitable control signal for a write laser used in the read/write head 71.

A suitable embodiment for such a control circuit 73 is disclosed in detail in Patent Application EP 0 288 114. An output stage 94 is inserted between an output of the read/write head 71 and a data signal path 97 for the purpose of recovering information and supplying information that has been read out. For information recovery the output stage comprises an EFM demodulator 95 and a CIRC decoder 96 customary for this information. An ATIP detector 79 of a customary type, for example, described in afore-mentioned Patent Application EP 0 325 330 is coupled to an output of the read/write head 71. Such an ATIP detector 79 recovers from detection signals produced by the read/write head the absolute time code represented by the FM modulated track modulation in the detected part of the track. Furthermore, the ATIP detector 79 produces a velocity signal having a frequency corresponding to the velocity with which the record carrier 70 is detected by the read/write head 71. This velocity signal is applied to a motor control circuit 90 to which, furthermore, a clock signal having a reference frequency is applied by a clock generator 91. The motor control circuit 90 is of a customary type controlling the motor drive 72 in such a way that the frequency of the velocity signal is substantially maintained equal to the frequency of the reference clock signal. Such a motor control circuit 90 may consist of, for example, a so-called PLL-motor velocity control circuit by which the motor is driven in response to the phase difference between the velocity signal and the reference clock signal.

The arrangement shown in Fig. 12 further includes a detection circuit 86 of a type shown, for example, in Fig. 9 for detecting a high-frequency signal component in a signal that has been read out by the read/write head 71 when the beginning of the still unrecorded track portion is searched for.

For the purpose of synchronization in the supply of the EFM modulated signal by the input stage 92, outputs of the clock signal generator 91 are also coupled to clock inputs of the CIRC encoder 76 and EFM modulator 77. Finally, the arrangement shown in Fig. 12 comprises a control unit 93 for controlling the recording and reading operations. For supplying sub-code information to the EFM modulator 77, the control unit 93 is coupled to sub-code inputs of the EFM modulator 77. The write unit 115 further includes a signal processing circuit for recovering the main information and sub-code information from the read signal produced by the read/write head 71. For receiving sub-code information from the read signal, the control unit 93 is coupled to sub-code outputs of the EFM demodulator 95. The control unit is further coupled to outputs of the ATIP decoder 79 for the benefit of the absolute time codes produced by the ATIP decoder 79. The control unit 93 is coupled to the radial displacing unit 74 for controlling the radial displacement of the read-write head. Furthermore, the control unit 93 is coupled to the control circuit 73 for setting the apparatus to the read or write mode.

Fig. 13 shows a flow chart of a program available in the computer system 110 for recording a next information volume. This program comprises a procedure P1 in which the computer system applies control commands to the control unit over the control signal path 98 for reading the volume descriptor, the path table and the directory files from the last-recorded information volume. This read information is copied to the RAM 112. Procedure P1 is followed by procedure P2. In procedure P2 new user files are created in a customary fashion and formatted and temporarily stored in the RAM. In addition, the path table and directory files are extended by information about the newly created user files. Then, in procedure P3, the newly created user files are recorded in a so-called track on the disc 70. In step S30 it is verified whether more tracks in the information volume are to be recorded. If there are, step S30 is followed by procedure P1. If there are not, procedure P3 is executed in which the modified volume descriptor, path table and file directories are recorded on the disc 70. Subsequently, during the execution of procedure P4 the lead-in information is recorded in the lead-in and the lead-out information in the lead-out of the relevant information volume.

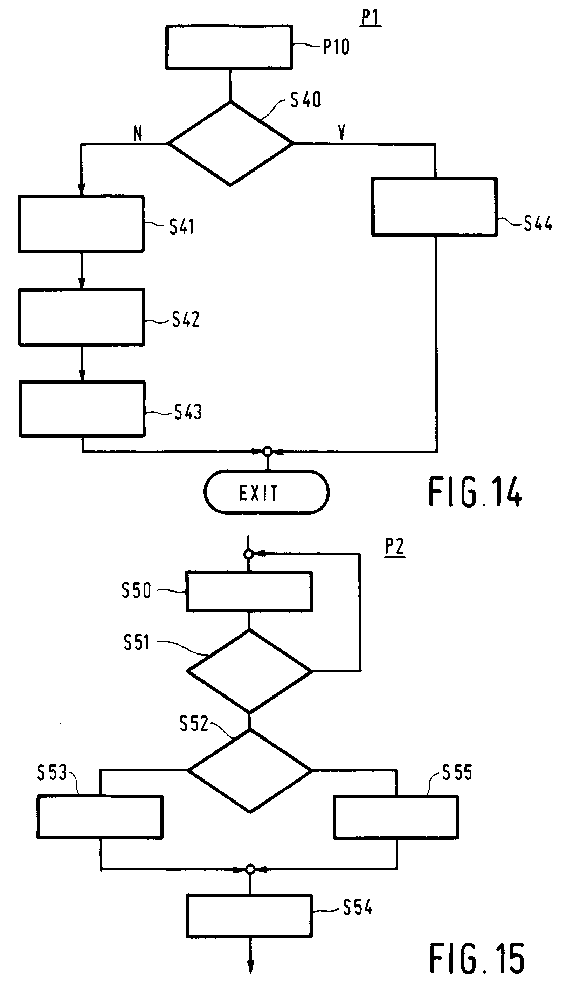

Fig. 14 shows a flow chart of an embodiment for the procedure P1. The procedure P1 is initiated by executing procedure P10 in which the value of offs is determined as is done, for example, by means of a program comprising the steps S10 to S16 as shown in Fig. 7 or a program comprising the steps S21 to S25 as shown in Fig. 10. Once the procedure P10 has been executed, it is verified in step S40 whether the disc present in the write unit is still completely blank or whether one or more information volumes have been recorded on the disc. This may be determined, for example, on the basis of the values of offs and Hoffs in the case where the program shown in Fig. 7 is executed. When a completely blank disc 70 the program of Fig. 7 will be terminated after the test in step S13 has been made for the first time. This implies that the values of offs and Hoffs are equal to zero when the program is terminated, which combination of values only occurs in a still unrecorded disc 70. Alternatively, it is possible to verify, while the procedure P10 is being executed, whether information is already present on the disc 70 and, subsequently, locate a flag indicating that the disc 70 is still unrecorded. If it is established, during the execution of step S40, that information volumes have already been recorded on the disc 70, the volume descriptor denoted by the value of offs is read out in step S41 and the contents are copied to the RAM 112.

Subsequently, when step S42 is executed, the logic sector number of the path table is determined on the basis of the read volume descriptor and the path table is read out. The contents of the read-out path table are copied to the RAM 112. Furthermore, in step S43, the logic sector numbers of the directory files are determined on the basis of the read-out path table and these directory files are read out. The contents of the directory files are again copied to the RAM 112. Once step S43 has been executed, the procedure P1 is terminated.

In the case where it is established in step S40 that the disc 70 is still completely blank, this step is followed step S44 in which a new volume descriptor is created and stored in the RAM 112.

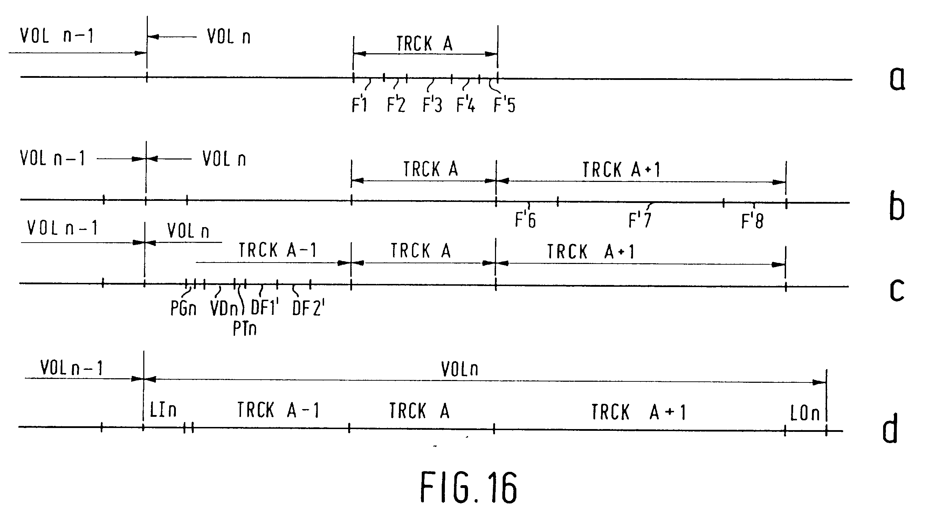

Fig. 15 shows a flow chart of an embodiment for the procedure P2. This procedure comprises a step S50 in which a user file is created and formatted and stored in the RAM 112 in a customary fashion. Subsequently, in step S51, it is verified whether a next user file is to be added to the track to be created. If so, step S50 is executed once more. If not, step S52 is executed in which it is verified whether one or more tracks of the information volume to be recorded have actually been recorded. If no track has yet been recorded for the relevant information volume, step S53 is executed. In this step the user files stored in the RAM 112 are recorded. These user files are recorded as a single track. The recording is initiated in a sector which is located at a specific distance from the end of the previous information volume. This distance is to be selected sufficiently large for introducing a lead-in LI between the end of the last-recorded information volume and the beginning of the newly recorded track, and for introducing a volume descriptor, a path table and directory files. Fig. 16a shows by way of illustration the position of the first-recorded track of a new information volume. In this drawing Figure the last fully recorded information volume is referenced VOLn-1. The first-recorded track of the new information volume to be recorded VOLn is denoted TRCK A. This track comprises the user files F1', F2', F3', F4' and F5'.

Once track TRCK A has been recorded, the copies of the path table and directory files present in the RAM 112 are modified by means of the data of the newly recorded user files F1', ..., F5' during the execution of step S54.

After step S54 has been executed, the procedure P2 is terminated.

When the procedure P2 is executed once more, it will be established when step S52 is being executed that a track of the information volume to be recorded VOLn has actually been recorded. In that case step S52 is followed by step S55 in which the next track is recorded adjoining the already recorded track TRCK A. Fig. 16b shows this next track is referenced TRCK A+1. This track again comprises one or more user files referenced F6', F7' and F8'. Once the step S55 has been executed, step S54 is again executed in which the copies of the path table and directory files are modified by information about the user files recorded in the track TRCK A+1. After step S54 has been executed, the procedure P2 is again terminated. If no further user files need to be recorded in the tracks, procedure P3 will be started subsequent to procedure P2. In this procedure the volume descriptor, the path table and the directory files will be recorded in a track TRCK A-1 between the end of the last-recorded information volume VOLn-1 and the beginning of the first track (TRCK A) with user files in the new information volume to be recorded VOLn.

Before commencing recording track TRCK A-1, the sector addresses of the sectors of track TRCK A-1 are determined in which the volume descriptor, the path table and the directory files are to be recorded, and the reference information in the volume descriptor and path table is to be modified in accordance with these sector addresses.

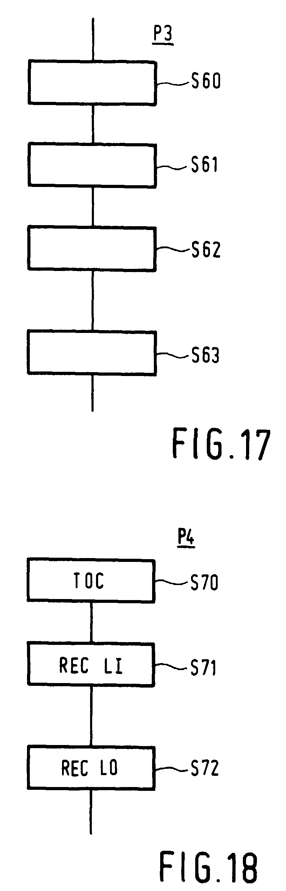

Fig. 17 shows a flow chart of an embodiment for procedure P3. This procedure is commenced by a step S60 in which the logic sector number of the first sector of the volume descriptor is determined on the basis of information which denotes the logic sector number of the last sector in the lead-out of the last-recorded information volume. Subsequently, in step S61, the logic sector numbers of the first sectors of the path table and the directory files are determined on the basis of the logic sector number on the first sector of the volume descriptor and the size of the volume descriptor, path table and directory files. Then, in step S62, the reference information in the volume descriptor and the path table to the beginning of the path table and the directory files respectively, is modified. The volume descriptor may comprise, as required, a reference to the sector intended for the recording of the volume descriptor of the information volume to be recorded next. After step S62 step S63 is executed. In this step the pregap preceding the track TRCK A-1 and track TRCK A-1 itself are recorded during the recording session. The recording is preferably such that the track TRCK A-1 is continued to the beginning of track TRCK A. The track portion between the last directory file and the beginning of track TRCK A may be filled by sectors having dummy information, for example, sectors having only "0"-bits. Once step S63 has been executed, the procedure P3 is terminated and procedure P4 is commenced.

Fig. 18 shows a flow chart of an embodiment for the procedure P4. The procedure comprises a first step S70 in which a so-called Table of Contents according to the format prescribed by the CD standard is assembled from the initial addresses of the tracks included in the information volume. Subsequently, there is step S71 in which information is recorded in the lead-in LIn (see Fig. 16d) while the Table of Contents is included in the sub-code of the recorded information. Then, in step S72, the lead-out information is recorded in the lead-out LOn. A reference to the initial address of the volume descriptor included in the information volume may then be included as required. After the information has been recorded in the lead-in and the lead-out, the recording of the information volume has been terminated and the disc 70 is suitable to read by means of the reading apparatus according to the invention.

The above describes an apparatus and method in which the information volume comprises a number of tracks to be recorded in a number of separate recording sessions. Needless to observe that it is alternatively possible to have all information to be included in the information volume ready in a memory and then record the complete information volume in a single recording session.

In the foregoing the volume descriptor for the information volume to be recorded next is obtained by adapting the volume descriptor read out from the last-recorded information volume. Alternatively, it is possible to assemble this volume descriptor each time anew.

It is only important that each new volume descriptor comprise a reference to files where the information necessary for controlling the search operation is available. The information referred to by the volume descriptor need not necessarily be recorded in the same information volume as the one in which the volume descriptor occurs.

The afore-mentioned embodiments relate to the recording of information formatted according to the CD-ROM standard. However, the invention is not restricted to recording this type of information. The invention may as well be applied to information formatted according to a different CD standard such as, for example, the CD-I standard or the PHOTO-CD standard. Furthermore, the invention may be applied to each recording of information volumes in which control information for information search included in the information volumes is included in each information volume.

Finally, it should be observed that the invention is pre-eminently suitable for recording and reading information on/from write-once record carriers. The use of the invention, however, is not restricted to this. It may also be applied to recording and reading information on/from record carriers of the rewritable type.

## Claims

1. Method of recording information on a record carrier, in which method an information volume is recorded in sectors of a track of the record carrier, which information volume (VOL1) comprises user data (F1,F2,F3), control information (PT1,DF1,DF2) for accessing the user data and a reference (VD1) to the control information, and at an instant after the recording of said information volume at least one next information volume (VOL2) comprising next user data (F4,F5,F6), next control information (PT2,DF3) for accessing the next user data and a next reference (VD2) to the next control information is recorded, characterized in that the next information volume (VOL2) is recorded in the track adjoining the end of the information volume recorded last, in that the reference (VD1) is accommodated in one or more sectors within a predetermined address range, in that the next reference (VD2) is a substitute reference accommodated in one or more sectors in a recoverable substitute address range and in that the next control information comprises substitute control information (PT2,DF1,DF2) for accessing user data in at least one preceding information volume (VOL1).

2. Method as claimed in Claim 1, characterized in that the size of the substitute address range (offs..offs+SZ) is equal to the size of the predetermined address range (0..SZ) in the first information volume.

3. Method as claimed in Claim 1, characterized in that, while the next information volume (VOL2) comprises a lead out area (L02) denoting the end of the information volume, the lead out area comprises backward reference information (61) referring to addressable parts of the track in which control information (VD2) of the respective information volume (VOL2) is recorded.

4. Method as claimed in Claim 1, 2 or 3, characterized in that at least one information volume (VOL1) comprises forward reference information (63) referring to addressable parts of the track comprising or intended to comprise next control information (VD2) of a succeeding next information volume (VOL2).

5. Method as claimed in Claim 3, characterized in that prior to the recording of the next information volume (VOL2) the end of the last-recorded information volume (VOL1) is searched for on the basis of said forward reference information (63).

6. Method as claimed in Claim 1, 2, 3 or 4, characterized in that prior to the recording of the next information volume (VOL2) the end of the last-recorded information volume (VOL1) is determined by detecting a transition from the end of the recorded part of the track to the still unrecorded part of the track.

7. Recording apparatus for recording information on a record carrier, which apparatus comprises recording means (92,73,71) for recording information in sectors in a track of the record carrier, formatting means (P1,P2,P3,P4) for composing an information volume (VOL1) in accordance with predetermined formatting instructions, according to which instructions the information volume is provided with user data (F1,F2,F3), control information (PT1,DF1,DF2) for accessing the user data, and a reference (VD1) to the control information, the formatting means (P1,P2,P3,P4) being arranged for composing at least one next information volume in accordance with above-mentioned formatting instructions including next user data (F4,F5,F6), next control information (PT2,DF3) for accessing the next user data, and a next reference (VD2) to the next control information, and control means (93) for causing the recording means to record the information volumes, characterized in that the control means are arranged for recording the next information volume in the track adjoining the end of the information volume recorded last, and in that the formatting means (P1,P2,P3,P4) are arranged for accommodating the reference (VD1) in one or more sectors within a predetermined address range in the information volume, for accommodating a substitute reference as the next reference (VD2) in one or more sectors in a recoverable substitute address range and for including in the next control information substitute control information (PT2,DF1,DF2) for accessing user data in at least one previously recorded information volume (VOL1).

8. Apparatus as claimed in Claim 7, characterized in that the size of the substitute address range (offs..offs+SZ) is equal to the size of the predetermined address range (0..SZ) in the first-recorded information volume.

9. Apparatus as claimed in Claim 7 or 8, characterized in that the apparatus comprises means (S72) for recording backward reference information (61) in a lead out area (L02) of the further information volume, the lead out area denoting the end of the respective information volume, which backward reference information (61) refers to addressable parts of the track in which substitute reference (VD2) of the respective ( information volume is recorded.

10. Apparatus as claimed in Claim 7, 8 or 9, characterized in that the apparatus comprises means (86) for searching the end of the last-recorded information volume by means of a detection of a transition from a track portion with recorded information to a track portion in which no information has yet been recorded.

11. Reading apparatus for reading a record carrier on which information is recorded arranged in sectors, which sectors have addresses that indicate the positions at which the relevant sectors are recorded, which record carrier comprises an information volume (VOL1) recorded in a track on the record carrier, which information volume (VOL1) comprises user data (F1,F2,F3), control information (PT1,DF1,DF2) for accessing the user data and a reference (VD1) to the control information, and which record carrier comprises at least one next information volume comprising next user data (F4,F5,F6), next control information (PT2,DF3) for accessing the next user data, and an next reference (VD2) to the next control information, which reading apparatus comprises address generating means (22) for generating addresses of sectors to be accessed and control means (22) for accessing information on the basis of generated addresses, characterized in that, while on the record carrier the next information volume (VOL2) is recorded in the track adjoining the end of the preceding information volume (VOL1), the reference (VD1) is accommodated in one or more sectors within a predetermined address range, the next reference (VD2) is a substitute reference accommodated in one or more sectors in a recoverable substitute address range and the next control information comprises substitute control information (PT2,DF1,DF2) for accessing user data in at least one preceding information volume (VOL1), the reading apparatus comprises means (S1,S2) for substituting a substitute address in the substitute address range for the generated address when the generated address corresponds to an address in the predetermined address range and in that the control means (22) are adapted for accessing user data in at least one preceding information volume (VOL1) on the basis of the substitute control information (PT2,DF1,DF2).

12. Apparatus as claimed in Claim 11, characterized in that the apparatus comprises determining means for determining an offset value (offs) on the basis of information read from the record carrier which information denotes the difference in the address value of the sectors in the predetermined address range and the address values of the substitute address range, the means (S1,S2) for substituting the predetermined addresses being arranged for augmenting the predetermined addresses by the offset value.

13. Apparatus as claimed in Claim 12, characterized in that the determining means (S21,S22,S23,S24) are arranged for determining the offset value (offs) on the basis of backward reference information (62) from a lead out area (L03) of a next information volume (VOL3) last recorded on the record carrier which backward reference information (62) refers to addressable parts of the track in which control information of the respective information volume (VOL3) is recorded.

14. Apparatus as claimed in Claim 12, characterized in that the determining means (S11,S12,S13,S14,S15) are arranged for determining the offset value (offs) on the basis of forward reference information (63,64,65) referring to addressable parts of the track comprising or intended to comprise control information of a succeeding information volume (VOL3,VOL3).

15. Apparatus as claimed in Claim 11 or 12, characterized in that the apparatus comprises means (S16) for determining the size (SZ) of the predetermined range (0..SZ) on the basis of information read from the record carrier.

16. Apparatus as claimed in Claim 15, characterized in that the range determining means (S16) are arranged for reading the magnitude of the range from a predetermined sector in the predetermined address range or the substitute address range.

17. Apparatus as claimed in Claim 15, characterized in that the range determining means (S16) are arranged for determining the end of the address range by detecting predetermined codes denoting the end of the address range.

18. Record carrier comprising an information volume (VOL1) recorded in sectors of a track on the record carrier, which information volume (VOL1) comprises user data (F1,F2,F3), control information (PT1,DF1,DF2) for accessing the user data, and a reference (VD1) to the control information, which record carrier comprises at least one next information volume (VOL2) comprising next user data (F4,F5,F6), next control information (PT2,DF3) for accessing the next user data, and an next reference (VD2) to the next control information, characterized in that the next information volume (VOL2) is recorded in the track adjoining the end of the preceding information volume (VOL1), the reference (VD1) is accommodated in one or more sectors within a predetermined address range, the next reference (VD2) is a substitute reference accommodated in one or more sectors in a recoverable substitute address range and the next control information comprises substitute control information (PT2,DF1,DF2) for accessing user data in at least one preceding information volume (VOL1).

19. Record carrier as claimed in Claim 18, characterized in that the size of the substitute address range (offs..offs+SZ) is equal to the size of the predetermined address range (0..SZ) in the front information volume on the track.

20. Record carrier as claimed in Claim 18 or 19, characterized in that the next information volume (VOL2) comprises a lead out area (L02) denoting the end of the information volume, the lead out area comprising backward reference information (61) referring to addressable parts of the track in which control information of the respective information volume is recorded.

21. Record carrier as claimed in Claim 18 or 19, characterized in that at least one information volume (VOL1) comprises forward reference information (63) referring to addressable parts of the track comprising or intended to comprise control information of a succeeding information volume (VOL2).

## Patentansprüche

1. Verfahren zum Aufzeichnen von Information auf einem Aufzeichnungsträger, in welchem Verfahren ein Informationsvolumen in Sektoren einer Spur des Aufzeichnungsträgers aufgezeichnet wird, welches Informationsvolumen (VOL1) Benutzerdaten (F1, F2, F3), Steuerinformation (PT1, DF1, DF2) zum Zugreifen auf die Benutzerdaten und einen Verweis (VD1) auf die Steuerinformation umfaßt, sowie zu einem Zeitpunkt nach dem Aufzeichnen des genannten Informationsvolumens zumindest ein nächstes Informationsvolumen (VOL2), das nächste Benutzerdaten (F4, F5, F6), nächste Steuerinformation (PT2, DF3) zum Zugreifen auf die nächsten Benutzerdaten und einen nächsten Verweis (VD1) auf die nächste Steuerinformation umfaßt, aufgezeichnet wird, dadurch gekennzeichnet, daß das nächste Informationsvolumen (VOL2) in der an das Ende des zuletzt aufgezeichneten Informationsvolumens angrenzenden Spur aufgezeichnet wird, daß der Verweis (VD1) in einem oder mehreren Sektoren innerhalb eines zuvor bestimmten Adressenbereichs untergebracht wird, daß der nächste Verweis (VD2) ein Ersatzverweis ist, der in einem oder mehreren Sektoren in einem wiederauffindbaren Ersatzadressenbereich untergebracht wird und daß die nächste Steuerinformation Ersatzsteuerinformation (PT2, DF1, DF2) zum Zugreifen auf Benutzerdaten in zumindest einem vorhergehenden Informationsvolumen (VOL1) umfaßt.

2. Verfahren nach Anspruch 1, dadurch gekennzeichnet, daß die Größe des Ersatzadressenbereichs (offs..offs+SZ) gleich der Größe des zuvor bestimmten Adressenbereichs (0..SZ) in dem ersten Informationsvolumen ist.

3. Verfahren nach Anspruch 1, dadurch gekennzeichnet, daß, während das nächste Informationsvolumen (VOL2) ein das Ende des Informationsvolumens angebendes Auslaufgebiet (LO2) umfaßt, das Auslaufgebiet Rückverweisinformation (61) umfaßt, die auf adressierbare Teile der Spur verweist, in der Steuerinformation (VD2) des jeweiligen Informationsvolumens (VOL2) aufgezeichnet wird.

4. Verfahren nach Anspruch 1, 2 oder 3, dadurch gekennzeichnet, daß zumindest ein Informationsvolumen (VOL1) Vorwärtsverweisinformation (63) umfaßt, die auf adressierbare Teile der Spur verweist, die nächste Steuerinformation (VD2) eines darauffolgenden Informationsvolumens (VOL2) umfaßt oder umfassen soll.

5. Verfahren nach Anspruch 3, dadurch gekennzeichnet, daß vor dem Aufzeichnen des nächsten Informationsvolumens (VOL2) das Ende des zuletzt aufgezeichneten Informationsvolumens (VOL1) anhand der genannten Vorwärtsverweisinformation (63) aufgesucht wird.

6. Verfahren nach Anspruch 1, 2, 3 oder 4, dadurch gekennzeichnet, daß vor dem Aufzeichnen des nächsten Informationsvolumens (VOL2) das Ende des zuletzt aufgezeichneten Informationsvolumens (VOL1) durch Detektieren eines Übergangs vom Ende des beschriebenen Teils der Spur zum noch nicht beschriebenen Teil der Spur bestimmt wird.

7. Aufzeichnungsgerät zum Aufzeichnen von Information auf einem Aufzeichnungsträger, welches Gerät Aufzeichnungsmittel (92, 73, 71) zum Aufzeichnen von Information in Sektoren in einer Spur des Aufzeichnungsträgers umfaßt, Formatierungsmittel (P1, P2, P3, P4) zum Zusammensetzen eines Informationsvolumens (VOL1) gemäß zuvor bestimmter Formatierungstingsanweisungen, gemäß welcher Anweisungen das Informationsvolumen mit Benutzerdaten (F1, F2, F3), Steuerinformation (PT1, DF1, DF2) zum Zugreifen auf die Benutzerdaten und einem Verweis (VD1) auf die Steuerinformation versehen wird, wobei die Formatierungsmittel (P1, P2, P3, P4) zum Zusammensetzen zumindest eines nächsten Informationsvolumens gemäß der oben genannten Formatierungsanweisungen eingerichtet sind, das nächste Benutzerdaten (F4, F5, F6), nächste Steuerinformation (PT2, DF3) zum Zugreifen auf nächste Benutzerdaten und einen nächsten Verweis (VD2) auf die nächste Steuerinformation enthält, sowie Steuerungsmittel (93), um zu bewirken, daß die Aufzeichnungsmittel die Informationsvolumen aufzeichnen, dadurch gekennzeichnet, daß die Steuerungsmittel zum Aufzeichnen des nächsten Informationsvolumens in der an das Ende des zuletzt aufgezeichneten Informationsvolumen grenzenden Spur eingerichtet sind und daß die Formatierungsmittel (P1, P2, P3, P4) zum Unterbringen des Verweises (VD1) in einem oder mehreren Sektoren innerhalb eines zuvor bestimmten Adressenbereichs in dem Informationsvolumen eingerichtet sind, zum Unterbringen eines Ersatzverweises als nächsten Verweis (VD2) in einem oder mehreren Sektoren in einem wiederauffindbaren Ersatzadressenbereich und zum Aufnehmen von Ersatzsteuerinformation (PT2, DF1, DF2) in der nächsten Steuerinformation zum Zugreifen auf Benutzerdaten in zumindest einem zuvor aufgezeichneten Informationsvolumen (VOL1).

8. Gerät nach Anspruch 7, dadurch gekennzeichnet, daß die Größe des Ersatzadressenbereichs (offs..offs+SZ) gleich der Größe des zuvor bestimmten Adressenbereichs (0..SZ) in dem zuerst aufgezeichneten Informationsvolumen ist.

9. Gerät nach Anspruch 7 oder 8, dadurch gekennzeichnet, daß das Gerät Mittel (S72) zum Aufzeichnen von Rückverweisinformation (61) in einem Auslaufgebiet (L02) des weiteren Informationsvolumens umfaßt, wobei das Auslaufgebiet das Ende des jeweiligen Informationsvolumens angibt, welche Rückverweisinformation (61) auf adressierbare Teile der Spur verweist, in der ein Ersatzverweis (VD2) des jeweiligen Informationsvolumens aufgezeichnet wird.

10. Gerät nach Anspruch 7, 8 oder 9, dadurch gekennzeichnet, daß das Gerät Mittel (86) umfaßt zum Aufsuchen des Endes des zuletzt aufgezeichneten Informationsvolumens mittels einer Detektion eines Übergangs von einem Spurabschnitt mit aufgezeichneter Information zu einem Spurabschnitt, in dem noch keine Information aufgezeichnet worden ist.

11. Auslesegerät zum Auslesen eines Aufzeichnungsträgers, auf dem in Sektoren angeordnete Information aufgezeichnet ist, welche Sektoren Adressen haben, die die Positionen anzeigen, bei denen die betreffenden Sektoren aufgezeichnet worden sind, wobei der Aufzeichnungsträger ein in einer Spur auf dem Aufzeichnungsträgers aufgezeichnetes Informationsvolumen (VOL1) umfaßt, welches Informationsvolumen (VOL1) Benutzerdaten (F1, F2, F3), Steuerinformation (PT1, DF1, DF2) zum Zugreifen auf die Benutzerdaten und einen Verweis (VD1) auf die Steuerinformation umfaßt und welcher Aufzeichnungsträger zumindest ein nächstes Informationsvolumen mit nächsten Benutzerdaten (F4, F5, F6), nächster Steuerinformation (PT2, DF3) zum Zugreifen auf die nächsten Benutzerdaten und einen nächsten Verweis (VD2) auf die nächste Steuerinformation umfaßt, welches Auslesegerät Adressengenerierungsmittel (22) zum Generieren von Adressen von anzusprechenden Sektoren und Steuerungsmittel (22) zum Zugreifen auf Information anhand generierter Adressen umfaßt, dadurch gekennzeichnet, daß, während auf dem Aufzeichnungsträger das nächste Informationsvolumen (VOL2) in der an das Ende des vorherigen Informationsvolumen (VOL1) grenzenden Spur aufgezeichnet wird, der Verweis (VD1) in einem oder mehreren Sektoren innerhalb eines zuvor bestimmten Adressenbereichs untergebracht ist, der nächste Verweis (VD2) ein Ersatzverweis ist, der in einem oder mehreren Sektoren in einem wiederauffindbaren Ersatzadressenbereich untergebracht ist, und die nächste Steuerinformation Ersatzsteuerinformation (PT2, DF1, DF2) zum Zugreifen auf Benutzerdaten in zumindest einem vorherigen Informationsvolumen (VOL1) umfaßt, das Auslesegerät Mittel (S1, S2) umfaßt zum Ersetzen einer Ersatzadresse im Ersatzadressenbereich durch die generierte Adresse, wenn die generierte Adresse einer Adresse im zuvor bestimmten Adressenbereich entspricht, und daß die Steuerungsmittel (22) zum Zugreifen auf Benutzerdaten in zumindest einem vorhergehenden Informationsvolumen (VOL1) auf Basis der Ersatzsteuerinformation (PT2, DF1, DF2) ausgebildet sind.

12. Gerät nach Anspruch 11, dadurch gekennzeichnet, daß das Gerät Bestimmungsmittel zum Bestimmen eines Offsetwertes (offs) auf Basis von aus dem Aufzeichnungsträger ausgelesener Information umfaßt, welche Information den Unterschied zwischen dem Adressenwert der Sektoren in dem zuvor bestimmten Adressenbereich und den Adressenwerten des Ersatzadressenbereichs angibt, wobei die Mittel (S1, S2) zum Ersetzen der zuvor bestimmten Adressen zum Erhöhen der zuvor bestimmten Adressen um den Offsetwert eingerichtet sind.

13. Gerät nach Anspruch 12, dadurch gekennzeichnet, daß die Bestimmungsmittel (S21, S22, S23, S24) eingerichtet sind zum Bestimmen des Offsetswertes (offs) auf Basis von Rückverweisinformation (62) aus einem Auslaufgebiet (L03) eines zuletzt auf dem Aufzeichnungsträger aufgezeichneten nächsten Informationsvolumens (VOL3), welche Rückverweisinformation (62) auf adressierbare Teile der Spur verweist, in der Steuerinformation des jeweiligen Informationsvolumens (VOL3) aufgezeichnet ist.

14. Gerät nach Anspruch 12, dadurch gekennzeichnet, daß die Bestimmungsmittel (S11, S12, S13, S14, S15) eingerichtet sind zum Bestimmen des Offsetswertes (offs) auf Basis von Vorwärtsverweisinformation (63, 64, 65), die auf adressierbare Teile der Spur verweist, die Steuerinformation eines nachfolgenden Informationsvolumens (VOL3, VOL3) enthalten oder enthalten sollen.

15. Gerät nach Anspruch 11 oder 12, dadurch gekennzeichnet, daß das Gerät Mittel (S16) zum Bestimmen der Größe (SZ) des zuvor bestimmten Bereichs (0...SZ) auf Basis von aus dem Aufzeichnungsträger ausgelesener Information umfaßt.

16. Gerät nach Anspruch 15, dadurch gekennzeichnet, daß die Bereichbestimmungsmittel (S16) zum Auslesen der Größe des Bereichs aus einem zuvor bestimmten Sektor in dem zuvor bestimmten Adressenbereich oder dem Ersatzadressenbereich eingerichtet sind.

17. Gerät nach Anspruch 15, dadurch gekennzeichnet, daß die Bereichbestimmungsmittel (S16) zum Bestimmen des Endes des Adressenbereichs durch Detektieren von zuvor bestimmten, das Ende des Adressenbereichs angebenden Codes eingerichtet sind.

18. Aufzeichnungsträger mit einem in Sektoren einer Spur auf dem Aufzeichnungsträger aufgezeichneten Informationsvolumen (VOL1), welches Informationsvolumen (VOL1) Benutzerdaten (F1, F2, F3), Steuerinformation (PT1, DF1, DF2) zum Zugreifen auf die Benutzerdaten und einen Verweis (VD1) auf die Steuerinformation umfaßt, wobei der Aufzeichnungsträger zumindest ein nächstes Informationsvolumen (VOL2) umfaßt, das nächste Benutzerdaten (F4, F5, F6), nächste Steuerinformation (PT2, DF3) zum Zugreifen auf die nächsten Benutzerdaten und einen nächsten Verweis (VD1) auf die nächste Steuerinformation enthält, dadurch gekennzeichnet, daß das nächste Informationsvolumen (VOL2) in der an das Ende des vorhergehenden Informationsvolumens (VOL1) angrenzenden Spur aufgezeichnet ist, daß der Verweis (VD1) in einem oder mehreren Sektoren innerhalb eines zuvor bestimmten Adressenbereichs untergebracht ist, daß der nächste Verweis (VD2) ein Ersatzverweis ist, der in einem oder mehreren Sektoren in einem wiederauffindbaren Ersatzadressenbereich untergebracht ist und daß die nächste Steuerinformation Ersatzsteuerinformation (PT2, DF1, DF2) zum Zugreifen auf Benutzerdaten in zumindest einem vorhergehenden Informationsvolumen (VOL1) umfaßt.

19. Aufzeichnungsträger nach Anspruch 18, dadurch gekennzeichnet, daß die Größe des Ersatzadressenbereichs (offs..offs+SZ) gleich der Größe des zuvor bestimmten Adressenbereichs (0..SZ) in dem vorderen Informationsvolumen auf der Spur ist.

20. Aufzeichnungsträger nach Anspruch 18 oder 19, dadurch gekennzeichnet, daß das nächste Informationsvolumen (VOL2) ein das Ende des Informationsvolumens angebendes Auslaufgebiet (LO2) umfaßt, wobei das Auslaufgebiet Rückverweisinformation (61) umfaßt, die auf adressierbare Teile der Spur verweist, in der Steuerinformation (VD2) des jeweiligen Informationsvolumens (VOL2) aufgezeichnet ist.

21. Aufzeichnungsträger nach Anspruch 18 oder 19, dadurch gekennzeichnet, daß zumindest ein Informationsvolumen (VOL1) Vorwärtsverweisinformation (63) umfaßt, die auf adressierbare Teile der Spur verweist, die Steuerinformation eines darauffolgenden Informationsvolumens (VOL2) umfaßt oder umfassen soll.

## Revendications

1. Procédé d'enregistrement d'informations sur un support d'enregistrement, au cours duquel un volume d'informations est enregistré dans des secteurs d'une piste du support d'enregistrement, lequel volume d'informations (VOL1) comprend des données utilisateur (F1, F2, F3), des informations de commande (PT1, DF1, DF2) pour accéder aux données utilisateur et une référence (VD1) aux informations de commande, et à un moment après l'enregistrement dudit volume d'informations, au moins un volume d'informations suivant (VOL2) comprenant des données utilisateur suivantes (F4, F5, F6), des informations de commande suivantes (PT2, DF3) pour accéder aux données utilisateur suivantes et une référence suivante (VD2) aux informations de commande suivantes est enregistré, caractérisé en ce que le volume d'informations suivant (VOL2) est enregistré dans la piste suivant la fin du volume d'informations enregistré en dernier, en ce que la référence (VD1) est reçue dans un ou plusieurs secteurs au sein d'une plage d'adresses prédéterminée, en ce que la référence suivante (VD2) est une référence de substitution reçue dans un ou plusieurs secteurs dans une plage d'adresses de substitution récupérable et en ce que les informations de commande suivantes comprennent des informations de commande de substitution (PT2, DF1, DF2) pour accéder aux données utilisateur dans au moins un volume d'informations précédent (VOL1).

2. Procédé suivant la revendication 1, caractérisé en ce que la taille de la plage d'adresses de substitution (offs..offs+SZ) est égale à la taille de la plage d'adresses prédéterminée (0..SZ) dans le premier volume d'informations.

3. Procédé suivant la revendication 1, caractérisé en ce que, alors que le volume d'informations suivant (VOL2) comprend une zone de sortie (LO2) indiquant la fin du volume d'informations, la zone de sortie comprend des informations de référence vers l'arrière (61) référant à des parties adressables de la piste dans laquelle des informations de commande (VD2) du volume d'informations correspondant (VOL2) sont enregistrées.

4. Procédé suivant la revendication 1, 2 ou 3, caractérisé en ce qu'au moins un volume d'informations (VOL1) comprend des informations de référence vers l'avant (63) référant à des parties adressables de la piste comprenant ou destinées à comprendre des informations de commande suivantes (VD2) d'un volume d'informations suivant (VOL2).

5. Procédé suivant la revendication 3, caractérisé en ce que, avant d'enregistrer le volume d'informations suivant (VOL2), la fin du dernier volume d'informations enregistré (VOL1) est recherchée sur la base desdites informations de référence vers l'avant (63).

6. Procédé suivant la revendication 1, 2, 3 ou 4, caractérisé en ce que, avant d'enregistrer le volume d'informations suivant (VOL2), la fin du dernier volume d'informations enregistré (VOL1) est déterminée en détectant une transition entre la fin de la partie enregistrée de la piste et la partie de la piste qui n'est pas encore enregistrée.

7. Appareil d'enregistrement pour enregistrer des informations sur un support d'enregistrement, lequel appareil comprend des moyens d'enregistrement (92, 73, 71) pour enregistrer des informations dans des secteurs d'une piste du support d'enregistrement, des moyens de formatage (P1, P2, P3, P4) pour composer un volume d'informations (VOL1) conformément à des instructions prédéterminées de formatage, instructions conformément auxquelles le volume d'informations est pourvu de données utilisateur (F1, F2, F3), d'informations de commande (PT1, DF1, DF2) pour accéder aux données utilisateur et d'une référence (VD1) aux informations de commande, les moyens de formatage (P1, P2, P3, P4) étant agencés pour composer au moins un volume d'informations suivant conformément aux instructions de formatage susmentionnées comprenant des données utilisateur suivantes (F4, F5, F6), des informations de commande suivantes (PT2, DF3) pour accéder aux données utilisateur suivantes et une référence suivante (VD2) aux informations de commande suivantes, et des moyens de commande (93) pour provoquer l'enregistrement des volumes d'informations par les moyens d'enregistrement, caractérisé en ce que les moyens de commande sont agencés pour enregistrer le volume d'informations suivant dans la piste continue à la fin du volume d'informations enregistré en dernier et en ce que les moyens de formatage (P1, P2, P3, P4) sont agencés pour recevoir la référence (VD1) dans un ou plusieurs secteurs au sein d'une plage d'adresses prédéterminée dans le volume d'informations, afin de recevoir une référence de substitution comme référence suivante (VD2) dans un ou plusieurs secteurs dans une plage d'adresses de substitution récupérable et d'inclure dans les informations de commande suivantes des informations de commande de substitution (PT2, DF1, DF2) pour accéder aux données utilisateurs dans au moins un volume d'informations (VOL1) enregistré précédemment.

8. Appareil suivant la revendication 7, caractérisé en ce que la taille de la plage d'adresses de substitution (offs..offs+SZ) est égale à la taille de la plage d'adresses prédéterminée (0..SZ) dans le premier volume d'informations enregistré.

9. Appareil suivant la revendication 7 ou 8, caractérisé en ce qu'il comprend un moyen (S72) pour enregistrer des informations de référence vers l'arrière (61) dans une zone de sortie (L02) du volume d'informations supplémentaire, la zone de sortie indiquant la fin du volume d'informations correspondant, lesquelles informations de référence vers l'arrière (61) font référence à des parties adressables de la piste dans laquelle la référence de substitution (VD2) du volume d'informations correspondant est enregistrée.

10. Appareil suivant la revendication 7, 8 ou 9, caractérisé en ce qu'il comprend un moyen (86) pour rechercher la fin du dernier volume d'informations enregistré au moyen d'une détection de la transition entre une partie de piste comportant des informations enregistrées et une partie de piste dans laquelle il n'a pas encore été enregistré d'informations.

11. Appareil de lecture pour lire un support d'enregistrement sur lequel des informations sont enregistrées dans des secteurs, lesquels secteurs ont des adresses qui indiquent les positions auxquelles les secteurs correspondants sont enregistrés, lequel support d'enregistrement comprend un volume d'informations (VOL1) enregistré dans une piste sur le support d'enregistrement, lequel volume d'informations (VOL1) comprend des données utilisateur (F1, F2, F3), des informations de commande (PT1, DF1, DF2) pour accéder aux données utilisateur et une référence (VD1) aux informations de commande, et lequel support d'enregistrement comprend au moins un volume d'informations suivant comprenant des données utilisateur suivantes (F4, F5, F6), des informations de commande suivantes (PT2, DF3) pour accéder aux données utilisateur suivantes et une référence suivante (VD2) aux informations de commande suivantes, lequel appareil de lecture comprend un moyen de génération d'adresses (22) pour générer des adresses de secteurs auxquels il faut accéder et un moyen de commande (22) pour accéder aux informations sur la base des adresses générées, caractérisé en ce que, alors que le volume d'informations suivant (VOL2) est enregistré sur le support d'enregistrement dans la piste suivant la fin du volume d'informations précédent (VOL1), la référence (VD1) est reçue dans un ou plusieurs secteurs au sein d'une plage d'adresses prédéterminée, la référence suivante (VD2) est une référence de substitution reçue dans un ou plusieurs secteurs dans une plage d'adresses de substitution récupérable et les informations de commande suivantes comprennent des informations de commande de substitution (PT2, DF1, DF2) pour accéder aux données utilisateur dans au moins un volume d'informations précédent (VOL1), en ce que l'appareil de lecture comprend des moyens (S1, S2) pour substituer une adresse de substitution dans la plage d'adresses de substitution à l'adresse générée lorsque l'adresse générée correspond à une adresse dans la plage d'adresses prédéterminée et en ce que le moyen de commande (22) est conçu pour accéder aux données utilisateur dans au moins un volume d'informations précédent (VOL1) sur la base des informations de commande de substitution (PT2, DF1, DF2).

12. Appareil suivant la revendication 11, caractérisé en ce qu'il comprend des moyens de détermination pour déterminer une valeur de décalage (offs) sur la base des informations lues sur le support d'enregistrement, lesquelles informations indiquent la différence de la valeur d'adresse des secteurs dans la plage d'adresses prédéterminée et les valeurs d'adresses de la plage d'adresses de substitution, les moyens (S1, S2) de substitution des adresses prédéterminées étant conçus pour augmenter les adresses prédéterminées de la valeur de décalage.

13. Appareil suivant la revendication 12, caractérisé en ce que les moyens de détermination (S21, S22, S23, S24) sont conçus pour déterminer la valeur de décalage (offs) sur la base d'informations de référence vers l'arrière (62) provenant d'une zone de sortie (L03) d'un volume d'informations suivant (VOL3) enregistré en dernier lieu sur le support d'enregistrement, lesquelles informations de référence vers l'arrière (62) se réfèrent à des parties adressables de la piste dans laquelle les informations de commande du volume d'informations correspondant (VOL3) sont enregistrées.

14. Appareil suivant la revendication 12, caractérisé en ce que les moyens de détermination (S11, S12, S13, S14, S15) sont conçus pour déterminer une valeur de décalage (offs) sur la base d'informations de référence vers l'avant (63, 64, 65) se référant à des parties adressables de la piste comprenant ou destinées à comprendre des informations de commande d'un volume d'informations suivant (VOL3, VOL3).

15. Appareil suivant la revendication 11 ou 12, caractérisé en ce qu'il comprend un moyen de détermination (S16) de la taille (SZ) de la plage prédéterminée (0..SZ) sur la base des informations lues sur le support d'enregistrement.

16. Appareil suivant la revendication 15, caractérisé en ce que le moyen de détermination de la plage (S16) est conçu pour lire l'amplitude de la plage dans un secteur prédéterminé dans la plage d'adresses prédéterminée ou la plage d'adresses de substitution.

17. Appareil suivant la revendication 15, caractérisé en ce que le moyen de détermination de la plage (S16) est conçu pour déterminer la fin de la plage d'adresses en détectant des codes prédéterminés indiquant la fin de la plage d'adresses.

18. Support d'enregistrement comprenant un volume d'informations (VOL1) enregistré dans des secteurs d'une piste sur le support d'enregistrement, lequel volume d'informations (VOL1) comprend des données utilisateur (F1, F2, F3), des informations de commande (PT1, DF1, DF2) pour accéder aux données utilisateur et une référence (VD1) aux informations de commande, lequel support d'enregistrement comprend au moins un volume d'informations suivant (VOL2) comprenant des données utilisateur suivantes (F4, F5, F6), des informations de commande suivantes (PT2, DF3) pour accéder aux données utilisateur suivantes et une référence suivante (VD2) aux informations de commande suivantes, caractérisé en ce que le volume d'informations suivant (VOL2) est enregistré dans la piste suivant la fin du volume d'informations précédent (VOL1), en ce que la référence (VD1) est reçue dans un ou plusieurs secteurs au sein d'une plage d'adresses prédéterminée, en ce que la référence suivante (VD2) est une référence de substitution reçue dans un ou plusieurs secteurs dans une plage d'adresses de substitution récupérable et en ce que les informations de commande suivantes comportent des informations de commande de substitution (PT2, DF1, DF2) pour accéder aux données utilisateur dans au moins un volume d'informations précédent (VOL1).

19. Support d'enregistrement suivant la revendication 18, caractérisé en ce que la taille de la plage d'adresses de substitution (offs..offs+SZ) est égale à la taille de la plage d'adresses prédéterminée (0..SZ) dans le premier volume d'informations sur la piste.

20. Support d'enregistrement suivant la revendication 18 ou 19, caractérisé en ce que le volume d'informations suivant (VOL2) comprend une zone de sortie (LO2) indiquant la fin du volume d'informations, la zone de sortie comprenant des informations de référence vers l'arrière (61) se référant à des parties adressables de la piste dans laquelle des informations de commande du volume d'informations correspondant sont enregistrées.

21. Support d'enregistrement suivant la revendication 18 ou 19, caractérisé en ce qu'au moins un volume d'informations(VOL1) comprend des informations de référence vers l'avant (63) se référant à des parties adressables de la piste comprenant ou destinées à comprendre des informations de commande d'un volume d'informations suivant (VOL2).
